# EUROPÄISCHE PATENTSCHRIFT

(11) **EP 3 336 376 B1**
(45) Veröffentlichungstag und Bekanntmachung des Hinweises auf die Patenterteilung: **12.02.2020**
(21) Anmeldenummer: 17207201.9
(22) Anmeldetag: 14.12.2017
(51) Int. Cl.: F16F 9/02

(54) **GASDRUCKFEDER**
GAS SPRING
RESSORT À GAZ

(30) Priorität: 19.12.2016 DE 102016225479
(43) Veröffentlichungstag der Anmeldung: 20.06.2018
(73) Patentinhaber: Robert Bosch GmbH, 70442 Stuttgart (DE)
(72) Erfinder: Gacsal, Denes, 3300 Eger (HU); Nagy, Daniel, 4032 Debrecen (HU); Szabo, Miklos, 3300 Eger (HU)

(56) Entgegenhaltungen:
- EP-A1- 0 554 578
- DE-A1- 2 546 057
- DE-A1- 10 238 448
- US-A1- 2003 042 661

## Beschreibung

Die Erfindung betrifft eine Gasdruckfeder.

### Stand der Technik

Gasdruckfedern herkömmlicher Bauart weisen in der Regel eine im Wesentlichen hohl ausgebildete Kammer auf, wobei die Kammer an einem axialen Endabschnitt eine Öffnung aufweist. Die Gasdruckfeder weist des Weiteren eine sich durch die Öffnung erstreckende, axial verschiebbare Kolbenstange auf sowie einen Kolben, welcher mit der Kolbenstange an einem, in der Kammer angeordneten, axialen Endabschnitt der Kolbenstange verbunden ist.

Die DE 10 2011116 345 A1 offenbart eine Gasdruckfeder für eine Heckklappe eines Kraftfahrzeugs, mit einem Gasdruckzylinder und einer darin verschiebbar geführten Kolbenstange, die an einem von dem Gasdruckzylinder vorstehenden Ende mit einer Kugelkopfaufnahme versehen ist, wobei auf der Kolbenstange zwischen der Kugelkopfaufnahme und dem Gasdruckzylinder eine Spiraldruckfeder angeordnet ist, die beim Zusammendrücken der Gasdruckfeder über einem vorbestimmten Punkt hinaus ebenfalls zusammengedrückt wird.

Die DE 25 46 057 A1 zeigt eine Verriegelungsvorrichtung für eine Gasfeder, welche mechanisch, nämlich durch ein Ineinandergreifen von Außen- und Innengewindegängen, verriegelt werden kann.

Die US 2003/0042661 A1 zeigt eine Gasfeder mit einem Zwischenkolben und mit einer Pumpe, wodurch das Volumen bzw. der Druck im Zylinderraum der Gasfeder entsprechend den geforderten Kräften angepasst werden kann.

Des Weiteren sind Gasdruckfedern am Markt erhältlich, welche es ermöglichen, den Kolben in der Kammer der Gasdruckfeder an einer spezifischen Position zu blockieren. Für bestimmte Anwendungen ist es jedoch wünschenswert, nicht nur ein Fixieren bzw. Blockieren des Kolbens in der Kammer zu bewirken, sondern eine Einstellbarkeit der axial bewegbaren Kolbenstange auf einen bestimmten Hub zu ermöglichen, wobei dieser Hub entsprechend vorgegebenen Kriterien innerhalb eines möglichen Hubs der Gasdruckfeder variierbar sein sollte.

Der Erfindung liegt somit die Aufgabe zugrunde, eine verbesserte Gasdruckfeder vorzusehen, welche eine beliebige Einstellbarkeit eines Hubs der Gasdruckfeder ermöglicht.

Die Erfindung wird mit einer Gasdruckfeder mit den Merkmalen des Patentanspruchs 1 gelöst.

### Offenbarung der Erfindung

Die vorliegende Erfindung schafft eine Gasdruckfeder, mit einer ersten Hohlkammer, die einen ersten axialen Endabschnitt und einen zweiten axialen Endabschnitt aufweist, wobei die erste Hohlkammer an dem zweiten axialen Endabschnitt eine Öffnung aufweist, mit einer sich durch die Öffnung erstreckenden, axial verschiebbaren, ersten Kolbenstange, mit einer, in oder außerhalb der ersten Hohlkammer angeordneten, zweiten Hohlkammer, mit einem ersten Kolben, welcher mit der ersten Kolbenstange an einem, in der ersten Hohlkammer oder der zweiten Hohlkammer angeordneten axialen Endabschnitt der ersten Kolbenstange verbunden und in der ersten Hohlkammer oder der zweiten Hohlkammer beweglich angeordnet ist, mit einem zwischen dem ersten axialen Endabschnitt und dem ersten Kolben in der ersten Hohlkammer oder der zweiten Hohlkammer beweglich angeordneten zweiten Kolben, und mit Mitteln zum Feststellen und Freigeben des zweiten Kolbens zum Verstellen eines Hubs der ersten Kolbenstange.

Die vorliegende Offenbarung schafft des Weiteren ein nicht erfindungsgemäßes Verfahren zum Betreiben einer Gasdruckfeder. Das Verfahren umfasst ein Bereitstellen einer ersten Hohlkammer, die einen ersten axialen Endabschnitt und einen zweiten axialen Endabschnitt aufweist, wobei die erste Hohlkammer an dem zweiten axialen Endabschnitt eine Öffnung aufweist.

Das Verfahren umfasst des Weiteren ein Bereitstellen einer sich durch die Öffnung erstreckenden, axial verschiebbaren, ersten Kolbenstange. Das Verfahren umfasst überdies ein Bereitstellen einer, in oder außerhalb der ersten Hohlkammer angeordneten, zweiten Hohlkammer.

Das Verfahren umfasst darüber hinaus ein Bereitstellen eines ersten Kolbens, welcher mit der ersten Kolbenstange an einem, in der ersten Hohlkammer oder der zweiten Hohlkammer angeordneten axialen Endabschnitt der ersten Kolbenstange verbunden und in der ersten Hohlkammer oder der zweiten Hohlkammer beweglich angeordnet ist. Das Verfahren umfasst ferner ein Bereitstellen eines zwischen dem ersten axialen Endabschnitt und dem ersten Kolben in der ersten Hohlkammer oder der zweiten Hohlkammer beweglich angeordneten zweiten Kolbens. Das Verfahren umfasst des Weiteren ein Feststellen und Freigeben des zweiten Kolbens zum Verstellen eines Hubs der ersten Kolbenstange durch Mittel.

Eine Idee der vorliegenden Erfindung ist es, durch Vorsehen der Mittel zum Feststellen und Freigeben des zweiten Kolbens in der zweiten Hohlkammer zum Verstellen eines Hubs der ersten Kolbenstange eine Variabilität des Hubs der Gasdruckfeder vorzusehen, sodass der Hub entsprechend vorgegebener Parameter bzw. Anforderungen frei variierbar ist.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die Mittel zum Feststellen und Freigeben des zweiten Kolbens eine zwischen dem ersten axialen Endabschnitt der ersten Kammer und dem in der zweiten Hohlkammer angeordneten zweiten Kolben angeordnete Ventileinrichtung aufweisen. Die Ventileinrichtung ist somit in vorteilhafter Weise dazu ausgebildet, durch Betätigen dieser den zweiten Kolben festzustellen oder freizugeben.

Gemäß einer weiteren bevorzugten Weiterbildung ist vorgesehen, dass die zweite Hohlkammer ein durch den gegenüber einer Innenoberfläche der zweiten Hohlkammer durch ein erstes Dichtmittel abgedichteten zweiten Kolben unterteiltes erstes Kammervolumen und zweites Kammervolumen aufweist, wobei die Ventileinrichtung dazu ausgebildet ist, das erste Kammervolumen und das zweite Kammervolumen fluidisch zu verbinden und zu trennen. Das Verbinden des ersten Kammervolumens und des zweiten Kammervolumens bewirkt somit in vorteilhafter Weise einen Gasaustausch zwischen dem ersten Kammervolumen und dem zweiten Kammervolumen, wodurch der zweite Kolben in der zweiten Hohlkammer axial bewegbar bzw. verstellbar ist. Bei Trennung der fluidischen Verbindung des ersten Kammervolumens und des zweiten Kammervolumens ist ein axiales Verstellen des zweiten Kolbens der zweiten Hohlkammer somit nicht möglich.

Gemäß einer weiteren bevorzugten Weiterbildung ist vorgesehen, dass das erste Kammervolumen und das zweite Kammervolumen mit einem Druckmittel, vorzugsweise mit Stickstoff, befüllt sind, wobei das erste Kammervolumen zwischen der Ventileinrichtung und dem Kolben und das zweite Kammervolumen zwischen dem zweiten Kolben und einer an dem zweiten axialen Endabschnitt der ersten Hohlkammer angeordneten Lagereinheit angeordnet ist, wobei die Ventileinrichtung durch ein zweites Dichtmittel gegenüber der zweiten Hohlkammer und die Lagereinheit mit einem dritten Dichtmittel gegenüber der ersten Hohlkammer abgedichtet sind. Somit sind das erste Kammervolumen und das zweite Kammervolumen in vorteilhafter Weise gegenüber einer Umgebung abgedichtet.

Gemäß einer weiteren bevorzugten Weiterbildung ist vorgesehen, dass die Ventileinrichtung einen Ventilkörper und ein, in einer in Axialrichtung des Ventilkörpers ausgebildeten Öffnung angeordnetes Ventil, vorzugsweise ein 2/2-Wege-Ventil, aufweist, wobei zwischen dem Ventilkörper und dem ersten axialen Endabschnitt der ersten Hohlkammer ein in der ersten Hohlkammer beweglicher, pneumatisch betätigter Kolben angeordnet ist, und wobei im Bereich des ersten axialen Endabschnitts der ersten Hohlkammer ein mit dem pneumatisch betätigbaren Kolben in pneumatischer Verbindung stehender Druckluftschalter angeordnet ist. Der pneumatisch betätigbare Kolben ist somit in vorteilhafter Weise durch Betätigung des Druckluftschalters bewegbar.

Gemäß einer weiteren bevorzugten Weiterbildung ist vorgesehen, dass der pneumatisch betätigbare Kolben einen Vorsprung aufweist, welcher in die in dem Ventilkörper ausgebildete Öffnung zumindest abschnittsweise einfügbar ist, und wobei das Ventil in der Öffnung des Ventilkörpers derart angeordnet ist, dass bei einer, durch Öffnen des Druckluftschalters und dadurch bedingten Druckbeaufschlagung des pneumatisch betätigbaren Kolbens bewirkten, axialen Verschiebung des pneumatisch betätigbaren Kolbens in Richtung des Ventilkörpers der Vorsprung des pneumatisch betätigbaren Kolbens dazu ausgebildet ist, das Ventil von einer geschlossenen Stellung in eine geöffnete Stellung zu bewegen.

Das Feststellen und Freigeben des zweiten Kolbens zum Verstellen des Hubs der ersten Kolbenstange der Gasdruckfeder ist somit in vorteilhafter Weise durch Betätigung der Ventileinrichtung mittels des pneumatisch betätigbaren Kolbens in Verbindung mit dem Druckluftschalter möglich.

Gemäß einer weiteren bevorzugten Weiterbildung ist vorgesehen, dass der Ventilkörper eine im Bereich der Öffnung ausgebildete, sich im Wesentlichen in Radialrichtung der Gasdruckfeder erstreckende Stichbohrung aufweist, welche mit einem, zwischen der ersten Hohlkammer und der zweiten Hohlkammer in Radialrichtung der Gasdruckfeder ausgebildeten Hohlraum kommuniziert, wobei der Hohlraum mit dem zweiten Kammervolumen fluidisch verbunden ist, wobei das Ventil dazu ausgebildet ist, in der geöffneten Stellung einen Gasaustausch zwischen dem ersten Kammervolumen zu dem zweiten Kammervolumen durchzuführen und in der geschlossenen Stellung einen Gasaustausch zwischen dem ersten Kammervolumen zu dem zweiten Kammervolumen zu blockieren. Der Gasaustausch zwischen dem ersten Kammervolumen und dem zweiten Kammervolumen erfolgt somit in vorteilhafter Weise durch den zwischen der ersten Hohlkammer und der zweiten Hohlkammer ausgebildeten Hohlraum, d.h. innerhalb der Gasdruckfeder, ohne dass bauliche Veränderungen in einem Außenbereich der Gasdruckfeder nötig sind.

Gemäß einer weiteren bevorzugten Weiterbildung ist vorgesehen, dass das Ventil in der geöffneten Stellung eine fluidische Verbindung zum ersten Kammervolumen aufweist, wobei vorzugsweise das Ventil eine in der zweiten Hohlkammer zwischen dem Ventilkörper und dem ersten Kammervolumen angeordnete Membran durchdringt. Somit kann das Ventil bei Betätigung in vorteilhafter Weise eine Verbindung zu dem ersten Kammervolumen herstellen, wobei diese Verbindung eine lösbare Verbindung ist.

Gemäß einer weiteren bevorzugten Weiterbildung ist vorgesehen, dass der Ventilkörper eine Rückstellfeder aufweist, welche in der Öffnung des Ventilkörpers angeordnet ist und den pneumatisch betätigbaren Kolben mit einer Federkraft beaufschlagt. Bei Schließen des Druckschalters, was eine Unterbrechung der Druckmittelversorgung des pneumatisch betätigbaren Kolbens bewirkt, wird der pneumatisch betätigbare Kolben somit durch die Federkraft der Rückstellfeder wieder in seine ursprüngliche Position zurückgestellt.

Gemäß einer weiteren bevorzugten Weiterbildung ist vorgesehen, dass die zweite Hohlkammer außerhalb der ersten Hohlkammer angeordnet ist, wobei die zweite Hohlkammer an einem ersten axialen Endabschnitt im Bereich des Ventilkörpers mit der ersten Hohlkammer fluidisch kommuniziert, und wobei die zweite Hohlkammer an einem zweiten axialen Endabschnitt mit dem ersten Kammervolumen fluidisch kommuniziert. Dadurch kann in vorteilhafter Weise beispielsweise ein Querschnitt der außerhalb der ersten Hohlkammer angeordneten zweiten Hohlkammer derart dimensioniert werden, dass ein hohes Volumen eines Gasaustausches stattfinden kann, wodurch eine leichte Verstellbarkeit des zweiten Kolbens in der ersten Hohlkammer durchführbar ist.

Gemäß der Erfindung ist vorgesehen, dass der erste Kolben und der zweite Kolben in dem ersten Kammervolumen angeordnet sind, wobei die erste Kolbenstange im Wesentlichen hohlzylindrisch ausgebildet ist, wobei in einem Hohlraum der ersten Kolbenstange zumindest abschnittsweise eine, im Wesentlichen hohlzylindrisch ausgebildete zweite Kolbenstange angeordnet ist, wobei der zweite Kolben mit einem, dem ersten axialen Endabschnitt der ersten Hohlkammer zugewandten axialen Endabschnitt der zweiten Kolbenstange verbunden ist. Der zweite Kolben ist somit in vorteilhafter Weise in Verlängerung der ersten Kolbenstange zwischen dem ersten axialen Endabschnitt der Gasdruckfeder und dem ersten Kolben angeordnet.

Gemäß einer weiteren bevorzugten Weiterbildung ist vorgesehen, dass durch die Mittel zum Feststellen und Freigeben des zweiten Kolbens in der ersten Hohlkammer eine Minimalposition der ersten Kolbenstange einstellbar ist. Aufgrund dessen, dass eine Maximalposition der ersten Kolbenstange durch eine Länge der ersten und/oder zweiten Hohlkammer definiert ist, kann somit ein Hub bzw. Verstellbereich der ersten Kolbenstange durch Einstellen bzw. Festlegen der Minimalposition der ersten Kolbenstange eingestellt werden.

Gemäß einer weiteren bevorzugten Weiterbildung ist vorgesehen, dass die zweite Kolbenstange aus der ersten Kolbenstange im Bereich des ersten Kolbens austritt, wobei zwischen dem ersten Kolben und der zweiten Kolbenstange eine Dichtung angeordnet ist. Durch Vorsehen der Dichtung zwischen dem ersten Kolben und der zweiten Kolbenstange ist dieser Bereich somit abgedichtet. Dadurch kann in vorteilhafter Weise ein in der ersten Kolbenstange anliegender Gasdruck nicht in unerwünschter Weise aus der ersten Kolbenstange in das zweite Kammervolumen austreten.

Gemäß einer weiteren bevorzugten Weiterbildung ist vorgesehen, dass der zweite axiale Endabschnitt der ersten Hohlkammer durch einen gegenüber der ersten Hohlkammer mittels eines vierten Dichtmittels abgedichteten Deckel geschlossen ist. Somit kann in vorteilhafter Weise ein Entweichen des Druckmittels aus dem ersten Kammervolumen in eine Umgebung verhindert werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht einer Gasdruckfeder gemäß bevorzugten Ausführungsformen der Erfindung;
- Fig. 2: eine Längsschnittansicht der Gasdruckfeder gemäß eine bevorzugten Ausführungsform der Erfindung;
- Fig. 3: eine Längsschnittansicht der Gasdruckfeder gemäß der bevorzugten Ausführungsform der Erfindung;
- Fig. 4: eine Längsschnittansicht der Gasdruckfeder gemäß der bevorzugten Ausführungsform der Erfindung;
- Fig. 5: eine Längsschnittansicht der Gasdruckfeder gemäß einer weiteren bevorzugten Ausführungsform der Erfindung; und
- Fig. 6: ein Ablaufdiagramm eines Verfahrens zum Betreiben der Gasdruckfeder gemäß der bevorzugten sowie der weiteren bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

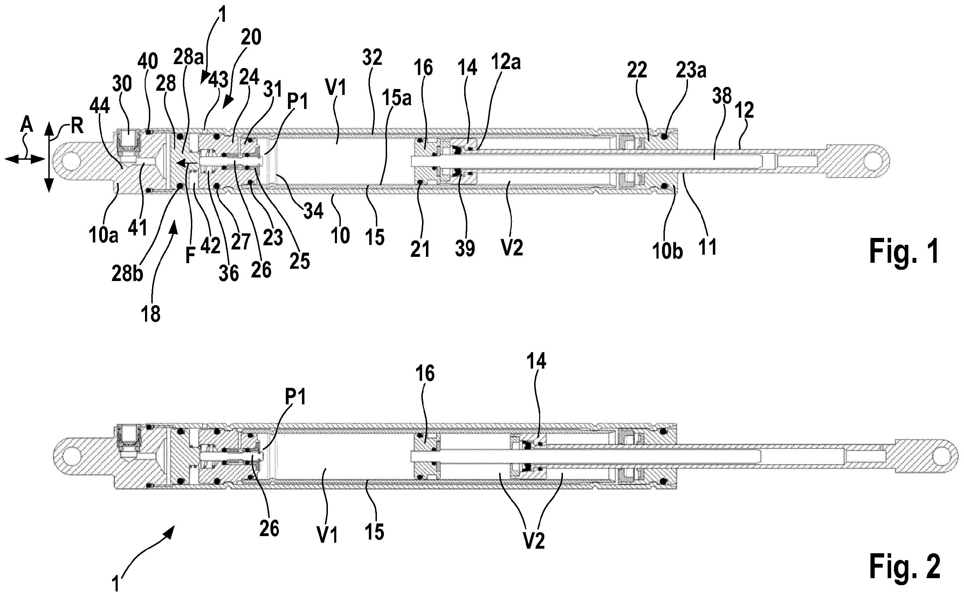

Fig. 1 zeigt eine Längsschnittansicht einer Gasdruckfeder gemäß bevorzugten Ausführungsformen der Erfindung.

Die Gasdruckfeder 1 weist eine erste Hohlkammer 10 auf. Die erste Hohlkammer 10 weist einen ersten axialen Endabschnitt 10a und einen zweiten axialen Endabschnitt 10b auf. Die erste Hohlkammer 10 weist des Weiteren an dem zweiten axialen Endabschnitt 10b eine Öffnung 11 auf. Die Gasdruckfeder 1 weist zudem eine sich durch die Öffnung 11 erstreckende, axial verschiebbare, erste Kolbenstange 12 auf. Die Gasdruckfeder 1 weist überdies eine in der ersten Hohlkammer 10 angeordnete, zweite Hohlkammer 15 auf.

Die Gasdruckfeder 1 weist des Weiteren einen ersten Kolben 14 auf, welcher mit der ersten Kolbenstange 12 an einem, in der zweiten Hohlkammer 15 angeordneten axialen Endabschnitt 12a der ersten Kolbenstange 12 verbunden und in der zweiten Hohlkammer 15 beweglich angeordnet ist. Die Gasdruckfeder 1 weist überdies einen zwischen dem ersten axialen Endabschnitt 10a und dem ersten Kolben 14 in der zweiten Hohlkammer 15 beweglich angeordneten zweiten Kolben 16 auf. Die Gasdruckfeder 1 weist überdies Mittel 18 zum Feststellen und Freigeben des zweiten Kolbens 16 zum Verstellen eines Hubs der ersten Kolbenstange 12 auf.

Die Mittel 18 zum Feststellen und Freigeben des zweiten Kolbens 16 weisen eine zwischen dem ersten axialen Endabschnitt 10a der ersten Kammer 10 und dem in der zweiten Hohlkammer 15 angeordneten zweiten Kolben 16 angeordnete Ventileinrichtung 20 auf.

Die zweite Hohlkammer 15 weist ein durch den gegenüber einer Innenoberfläche 15a der zweiten Hohlkammer 15 durch ein erstes Dichtmittel 21 abgedichteten zweiten Kolben 16 unterteiltes erstes Kammervolumen V1 und zweites Kammervolumen V2 auf. Die Ventileinrichtung 20 ist dazu ausgebildet, das erste Kammervolumen V1 und das zweite Kammervolumen V2 fluidisch zu verbinden und zu trennen.

Das erste Kammervolumen V1 und das zweite Kammervolumen V2 sind mit einem Druckmittel befüllt. Das Druckmittel ist vorzugsweise durch Stickstoff ausgebildet. Das erste Kammervolumen V1 ist zwischen der Ventileinrichtung 20 und dem zweiten Kolben 16 angeordnet. Das zweite Kammervolumen V2 ist zwischen dem zweiten Kolben 16 und einer an dem zweiten axialen Endabschnitt 10b der ersten Hohlkammer 10 angeordneten Lagereinheit 22 angeordnet. Die Ventileinrichtung 20 ist durch ein zweites Dichtmittel 23 gegenüber der zweiten Hohlkammer 15 und die Lagereinheit 22 mit einem dritten Dichtmittel 23a gegenüber der ersten Hohlkammer 10 abgedichtet.

Die Ventileinrichtung 20 weist einen Ventilkörper 24 und ein, in einer in Axialrichtung A des Ventilkörpers 24 ausgebildeten Öffnung 25 angeordnetes Ventil 26 auf. Das Ventil 26 ist vorzugsweise durch ein 2/2-Wege-Ventil ausgebildet. Zwischen dem Ventilkörper 24 und dem ersten axialen Endabschnitt 10a der ersten Hohlkammer 10 ist ein in der ersten Hohlkammer 10 beweglicher, pneumatisch betätigbarer Kolben 28 angeordnet. Im Bereich des ersten axialen Endabschnitts 10a der ersten Hohlkammer 10 ist ein mit dem pneumatisch betätigbaren Kolben 28 in pneumatischer Verbindung stehender Druckluftschalter 30 angeordnet.

Der pneumatisch betätigbare Kolben 28 weist einen Vorsprung 28a auf. Der Vorsprung 28a ist in die in dem Ventilkörper 24 ausgebildete Öffnung 25 zumindest abschnittsweise einfügbar. Der Vorsprung 28a und die in dem Ventilkörper 24 ausgebildete Öffnung 25 können eine beliebige geometrische Form aufweisen. Vorzugsweise weisen der Vorsprung 28a und die Öffnung 25 eine gleiche geometrische Form auf, sodass diese formschlüssig ineinander fügbar sind.

Das Ventil 26 ist in der Öffnung 25 des Ventilkörpers 24 derart angeordnet, dass bei einer, durch Öffnen des Druckluftschalters 30 und dadurch bedingten Druckbeaufschlagung des pneumatisch betätigbaren Kolbens 28 bewirkten, axialen Verschiebung des pneumatisch betätigbaren Kolbens 28 in Richtung des Ventilkörpers 24 der Vorsprung 28a des pneumatisch betätigbaren Kolbens 28 dazu ausgebildet ist, das Ventil 26 von einer geschlossenen Stellung P1 in eine geöffnete Stellung P2 zu bewegen. Ferner ist der pneumatisch betätigbare Kolben 28 durch ein sechstes Dichtelement gegenüber einer Innenoberfläche der ersten Hohlkammer 10 abgedichtet.

Der Ventilkörper 24 weist eine im Bereich der Öffnung 25 ausgebildete, sich im Wesentlichen in Radialrichtung R der Gasdruckfeder 1 erstreckende Stichbohrung 31 auf. Die Stichbohrung 31 kommuniziert mit einem, zwischen der ersten Hohlkammer 10 und der zweiten Hohlkammer 15 in Radialrichtung R der Gasdruckfeder 1 ausgebildeten Hohlraum 32. Der Hohlraum 32 ist mit dem zweiten Kammervolumen V2 fluidisch verbunden. Das Ventil 26 ist dazu ausgebildet, in der geöffneten Stellung P2 einen Gasaustausch zwischen dem ersten Kammervolumen V1 zu dem zweiten Kammervolumen V2 durchzuführen und in der geschlossenen Stellung P1 einen Gasaustausch zwischen dem ersten Kammervolumen V1 und dem zweiten Kammervolumen V2 zu blockieren.

Das Ventil 26 weist in der geöffneten Stellung P1 eine fluidische Verbindung zum ersten Kammervolumen V1 auf, wobei vorzugsweise das Ventil 26 eine in der zweiten Hohlkammer 15 zwischen dem Ventilkörper 24 und dem ersten Kammervolumen V1 angeordnete Membran 34 durchdringt. Alternativ kann das Herstellen einer Verbindung durch das Ventil 26 zu dem ersten Kammervolumen V1 auch mit anderen Mitteln erfolgen.

Der Ventilkörper 24 weist eine Rückstellfeder 36 auf, welche in der Öffnung 25 des Ventilkörpers 24 angeordnet ist und den pneumatisch betätigbaren Kolben 28 mit einer Federkraft F beaufschlagt. Durch die Mittel 18 zum Feststellen und Freigeben des zweiten Kolbens 16 in der zweiten Hohlkammer 15 ist eine Minimalposition der ersten Kolbenstange 12 einstellbar.

Die zweite Kolbenstange 38 tritt aus der ersten Kolbenstange 12 im Bereich des ersten Kolbens 14 aus. Zwischen dem ersten Kolben 14 und der zweiten Kolbenstange 38 ist eine Dichtung 39 angeordnet. Der zweite axiale Endabschnitt 10b der ersten Hohlkammer 10 ist durch einen gegenüber der ersten Hohlkammer 10 mittels eines vierten Dichtmittels 40 abgedichteten Deckel 44 geschlossen.

Darüber hinaus ist der Druckluftschalter 30 vorzugsweise in dem Deckel 44 der Gasdruckfeder 1 angeordnet. Der Deckel 44 weist hierfür eine entsprechende Aussparung auf. Der Druckluftschalter 30 ist mit dem pneumatisch betätigbaren Kolben 28 durch eine in dem Deckel 44 ausgebildete Leitung 41 verbunden. Bei dem Bewegen des pneumatisch betätigbaren Kolbens 28 in Axialrichtung der Gasdruckfeder 1 kann eine in einem Hohlraum 42, welcher zwischen dem pneumatisch betätigbaren Kolben 28 und der Ventileinrichtung 20 angeordnet ist, vorhandenes Gasvolumen über einen zwischen einer Außenoberfläche der Ventileinrichtung 20 und der Innenoberfläche der ersten Hohlkammer 10 ausgebildeten Spalt, welcher mit einer in der ersten Hohlkammer 10 ausgebildeten Öffnung kommuniziert, an eine Umgebung der Gasdruckfeder 1 abgegeben werden.

Somit kommt es in vorteilhafter Weise nicht zu einem Druckaufbau in dem Hohlraum 42 bei der Betätigung des pneumatisch betätigbaren Kolbens 28. Des Weiteren ist die Ventileinrichtung 20 durch ein fünftes Dichtelement 27 gegenüber der Innenoberfläche der ersten Hohlkammer 10 abgedichtet. Die Ventileinrichtung 20 ist des Weiteren positionsfest in der ersten Hohlkammer 10 der Gasdruckfeder 1 angeordnet. Dies wird durch ein Verstemmen der Gasdruckfeder 1 an einer Außenoberfläche der Gasdruckfeder 1 realisiert, wodurch eine Wand der ersten Hohlkammer 10 mit der Ventileinrichtung 20 verstemmt wird und die Ventileinrichtung 20 somit positionsfest innerhalb der ersten Hohlkammer 10 angeordnet ist. Gleichermaßen ist die zweite Hohlkammer 15 auf die gleiche Art und Weise durch Anwenden bzw. Aufbringen eines Prägestempels an der Außenoberfläche der Gasdruckfeder 1 mit der ersten Hohlkammer 10 verstemmt. Gleiches gilt für die Lagereinheit 22, welche an dem zweiten axialen Endabschnitt 10b mit der ersten Hohlkammer 10 verstemmt ist.

In der in Fig. 1 gezeigten Darstellung ist das Ventil 26 der Ventileinrichtung 20 in der ersten, geschlossenen Stellung gezeigt. In dieser Stellung ist ein Gasaustausch zwischen dem ersten Kammervolumen V1 und dem zweiten Kammervolumen V2 blockiert. Der zweite Kolben 16 ist somit positionsfest in der zweiten Hohlkammer 15 der Gasdruckfeder 1 positioniert. Der Hub der ersten Kolbenstange 12 ist somit auf einen Bereich zwischen dem zweiten Kolben 16 und der Lagereinheit 22 begrenzt, welcher in der in Fig. 1 gezeigten Darstellung in etwa der Hälfte des möglichen Hubs der ersten Kolbenstange 12 entspricht.

Fig. 2 zeigt eine Längsschnittansicht der Gasdruckfeder gemäß der bevorzugten Ausführungsform der Erfindung. In dem in Fig. 2 dargestellten Zustand ist das Ventil 26 ebenso in der ersten, geschlossenen Stellung P1 angeordnet. Der zweite Kolben 16 ist in der gleichen Position wie in Fig. 1 dargestellt positionsfest in der zweiten Hohlkammer 15 angeordnet. Der erste Kolben ist in der in Fig. 2 gezeigten Darstellung von dem zweiten Kolben beabstandet und ist innerhalb eines möglichen Auslenkungsbereichs des Kolbens in dem zweiten Kammervolumen V2 der zweiten Hohlkammer 15 positioniert.

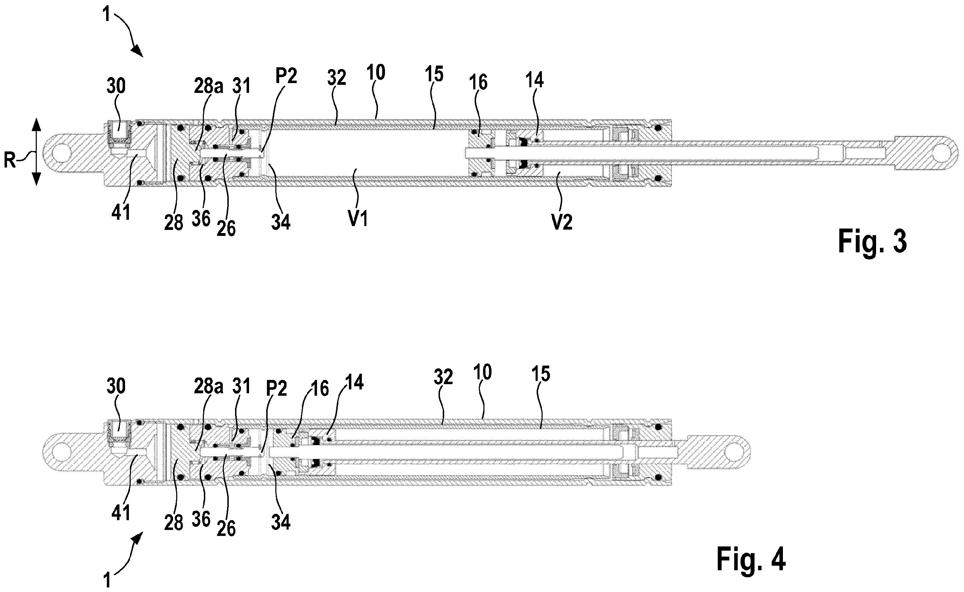

Fig. 3 zeigt eine Längsschnittansicht der Gasdruckfeder gemäß der bevorzugten Ausführungsform der Erfindung. In der in Fig. 3 gezeigten Darstellung ist das Ventil 26 in der geöffneten, zweiten Stellung P2 gezeigt, in welcher ein Endabschnitt des Ventils 26 die Membran 34 durchdringt und somit einen Gasaustausch zwischen dem ersten Kammervolumen V1 und dem zweiten Kammervolumen V2 über die Stichbohrung 31 und den zwischen der ersten Hohlkammer 10 und der zweiten Hohlkammer 15 in Radialrichtung R der Gasdruckfeder 1 ausgebildeten Hohlraum 32 ermöglicht.

Der zweite Kolben 16 ist somit nunmehr in der zweiten Hohlkammer 15 in Axialrichtung der Gasdruckfeder 1 frei bewegbar. Dadurch kann der Hub der ersten Kolbenstange 12 verstellt werden.

Fig. 4 zeigt eine Längsschnittansicht der Gasdruckfeder gemäß der bevorzugten Ausführungsform der Erfindung. In der in Fig. 4 gezeigten Darstellung ist das Ventil 26 in der geöffneten Stellung P2 gezeigt. Der erste Kolben 14 und der zweite Kolben 16 sind in ihrer Maximalposition, d.h. maximal in die Gasdruckfeder 1 eingefahren. Der ersten Kolbenstange 12 steht somit der maximal verfügbare Hub zur Verfügung.

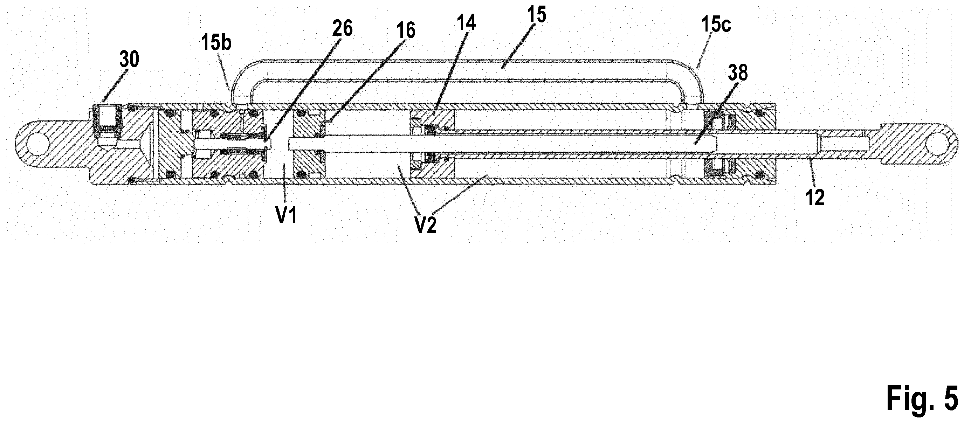

Fig. 5 zeigt eine Längsschnittansicht der Gasdruckfeder gemäß einer weiteren bevorzugten Ausführungsform der Erfindung. In der in Fig. 5 dargestellten weiteren bevorzugten Ausführungsform ist die zweite Hohlkammer 15 außerhalb der ersten Hohlkammer 10 angeordnet. Die zweite Hohlkammer 15 kommuniziert an einem ersten axialen Endabschnitt 15b im Bereich des Ventilkörpers 24 mit der ersten Hohlkammer 10 fluidisch. Die zweite Hohlkammer 15 kommuniziert überdies an einem zweiten axialen Endabschnitt 15c mit dem ersten Kammervolumen V1 fluidisch.

Der erste Kolben 14 und der zweite Kolben 16 sind in der vorliegenden Ausführungsform in dem ersten Kammervolumen V1 sowie gleichzeitig in der ersten Hohlkammer 10 angeordnet, wobei die erste Kolbenstange 12 im Wesentlichen hohl ausgebildet ist, wobei in einem Hohlraum 12b der ersten Kolbenstange 12 zumindest abstandsweise eine, im Wesentlichen hohl ausgebildete zweite Kolbenstange 38 angeordnet ist, wobei der zweite Kolben 16 mit der zweiten Kolbenstange 38 an einem, dem ersten axialen Endabschnitt 10a der ersten Hohlkammer 10 zugewandten axialen Endabschnitt 38a der zweiten Kolbenstange 38 verbunden ist.

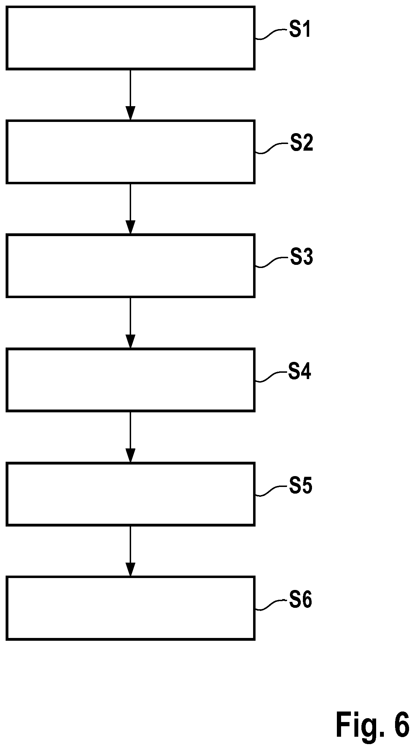

Fig. 6 zeigt ein Ablaufdiagramm eines Verfahrens zum Betreiben der Gasdruckfeder gemäß der bevorzugten sowie der weiteren bevorzugten Ausführungsform der Erfindung.

Das Verfahren umfasst ein Bereitstellen S1 einer ersten Hohlkammer, die einen ersten axialen Endabschnitt und einen zweiten axialen Endabschnitt aufweist, wobei die erste Hohlkammer an dem zweiten axialen Endabschnitt eine Öffnung aufweist.

Das Verfahren umfasst des Weiteren ein Bereitstellen S2 einer sich durch die Öffnung erstreckenden, axial verschiebbaren, ersten Kolbenstange. Das Verfahren umfasst überdies ein Bereitstellen S3 einer, in oder außerhalb der ersten Hohlkammer angeordneten, zweiten Hohlkammer.

Das Verfahren umfasst darüber hinaus ein Bereitstellen S4 eines ersten Kolbens, welcher mit der ersten Kolbenstange an einem, in der ersten Hohlkammer oder der zweiten Hohlkammer angeordneten axialen Endabschnitt der ersten Kolbenstange verbunden und in der ersten Hohlkammer oder der zweiten Hohlkammer beweglich angeordnet ist. Das Verfahren ferner umfasst ein Bereitstellen S5 eines zwischen dem ersten axialen Endabschnitt und dem ersten Kolben in der ersten Hohlkammer oder der zweiten Hohlkammer beweglich angeordneten zweiten Kolbens. Das Verfahren umfasst des Weiteren ein Feststellen und Freigeben S6 des zweiten Kolbens zum Verstellen eines Hubs der ersten Kolbenstange durch Mittel.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können eine Form, Abmessung und/oder eine Beschaffenheit der Komponenten der Gasdruckfeder abgeändert werden.

### Bezugszeichenliste

- 1: Gasdruckfeder
- 10: erste Hohlkammer
- 10a: erster axialer Endabschnitt
- 10b: zweiter axialer Endabschnitt
- 11: Öffnung
- 12: erste Kolbenstange
- 12a: axialer Endabschnitt der ersten Kolbenstange
- 12b: Hohlraum
- 14: erster Kolben
- 15: zweite Hohlkammer
- 15a: Innenoberfläche der zweiten Hohlkammer
- 15b: erster axialer Endabschnitt
- 15c: zweiter axialer Endabschnitt
- 16: zweiter Kolben
- 18: Mittel
- 20: Ventileinrichtung
- 21: erstes Dichtmittel
- 22: Lagereinheit
- 23: zweites Dichtmittel
- 23a: drittes Dichtmittel
- 24: Ventilkörper
- 25: Öffnung
- 26: Ventil
- 27: fünfte Dichtmittel
- 28: pneumatisch betätigbarer Kolben
- 28a: Vorsprung
- 28b: sechstes Dichtmittel
- 30: Druckluftschalter
- 32: Hohlraum
- 34: Membran
- 36: Rückstellfeder
- 38: zweite Kolbenstange
- 38a: axialer Endabschnitt
- 39: Dichtung
- 40: vierte Dichtmittel
- 41: Leitung
- 42: Hohlraum
- 43: Öffnung
- 44: Deckel
- A: Axialrichtung
- F: Federkraft
- P1: geschlossene Stellung
- P2: geöffnete Stellung
- R: Radialrichtung
- V1: erstes Kammervolumen
- V2: zweites Kammervolumen

## Patentansprüche

1. Gasdruckfeder (1), mit einer ersten Hohlkammer (10), die einen ersten axialen Endabschnitt (10a) und einen zweiten axialen Endabschnitt (10b) aufweist, wobei die erste Hohlkammer (10) an dem zweiten axialen Endabschnitt (10b) eine Öffnung (11) aufweist;
mit einer sich durch die Öffnung (11) erstreckenden, axial verschiebbaren, ersten Kolbenstange (12);
mit einer, in oder außerhalb der ersten Hohlkammer (10) angeordneten, zweiten Hohlkammer (15);
mit einem ersten Kolben (14), welcher mit der ersten Kolbenstange (12) an einem, in der ersten Hohlkammer (10) oder der zweiten Hohlkammer (15) angeordneten axialen Endabschnitt (12a) der ersten Kolbenstange (12) verbunden und in der ersten Hohlkammer (10) oder der zweiten Hohlkammer (15) beweglich angeordnet ist;
mit einem zwischen dem ersten axialen Endabschnitt (10a) und dem ersten Kolben (14) in der ersten Hohlkammer (10) oder der zweiten Hohlkammer (15) beweglich angeordneten zweiten Kolben (16); und mit
Mitteln (18) zum Feststellen und Freigeben des zweiten Kolbens (16) zum Verstellen eines Hubs der ersten Kolbenstange (12),
**dadurch gekennzeichnet,**
**dass** der erste Kolben (14) und der zweite Kolben (16) in dem ersten Kammervolumen (V1) angeordnet sind, wobei die erste Kolbenstange (12) im Wesentlichen hohl ausgebildet ist, wobei in einem Hohlraum (12b) der ersten Kolbenstange (12) zumindest abschnittsweise eine, im Wesentlichen hohl ausgebildete zweite Kolbenstange (38) angeordnet ist, wobei der zweite Kolben (16) mit einem, dem ersten axialen Endabschnitt (10a) der ersten Hohlkammer (10) zugewandten axialen Endabschnitt der zweiten Kolbenstange (38) verbunden ist.

2. Gasdruckfeder nach Anspruch 1, **dadurch gekennzeichnet, dass** die Mittel (18) zum Feststellen und Freigeben des zweiten Kolbens (16) eine zwischen dem ersten axialen Endabschnitt (10a) der ersten Kammer (10) und dem in der zweiten Hohlkammer (15) angeordneten zweiten Kolben (16) angeordnete Ventileinrichtung (20) aufweisen.

3. Gasdruckfeder nach Anspruch 2, **dadurch gekennzeichnet, dass** die zweite Hohlkammer (15) ein durch den gegenüber einer Innenoberfläche (15a) der zweiten Hohlkammer (15) durch ein erstes Dichtmittel (21) abgedichteten zweiten Kolben (16) unterteiltes erstes Kammervolumen (V1) und zweites Kammervolumen (V2) aufweist, wobei die Ventileinrichtung (20) dazu ausgebildet ist, das erste Kammervolumen (V1) und das zweite Kammervolumen (V2) fluidisch zu verbinden und zu trennen.

4. Gasdruckfeder nach Anspruch 3, **dadurch gekennzeichnet, dass** das erste Kammervolumen (V1) und das zweite Kammervolumen (V2) mit einem Druckmittel, vorzugsweise mit Stickstoff, befüllt sind, wobei das erste Kammervolumen (V1) zwischen der Ventileinrichtung (20) und dem zweiten Kolben (16) und das zweite Kammervolumen (V2) zwischen dem zweiten Kolben (16) und einer an dem zweiten axialen Endabschnitt (10b) der ersten Hohlkammer (10) angeordneten Lagereinheit (22) angeordnet ist, wobei die Ventileinrichtung (20) durch ein zweites Dichtmittel (23) gegenüber der zweiten Hohlkammer (15) und die Lagereinheit (22) mit einem dritten Dichtmittel (23a) gegenüber der ersten Hohlkammer (10) abgedichtet sind.

5. Gasdruckfeder nach Anspruch 3 oder 4, **dadurch gekennzeichnet, dass** die Ventileinrichtung (20) einen Ventilkörper (24) und ein, in einer in Axialrichtung (A) des Ventilkörpers (24) ausgebildeten Öffnung (25) angeordnetes Ventil (26), vorzugsweise ein 2/2-Wege-Ventil, aufweist, wobei zwischen dem Ventilkörper (24) und dem ersten axialen Endabschnitt (10a) der ersten Hohlkammer (10) ein in der ersten Hohlkammer (10) beweglicher, pneumatisch betätigbarer Kolben (28) angeordnet ist, und wobei im Bereich des ersten axialen Endabschnitts (10a) der ersten Hohlkammer (10) ein mit dem pneumatisch betätigbaren Kolben (28) in pneumatischer Verbindung stehender Druckluftschalter (30) angeordnet ist.

6. Gasdruckfeder nach Anspruch 5, **dadurch gekennzeichnet, dass** der pneumatisch betätigbare Kolben (28) einen Vorsprung (28a) aufweist, welcher in die in dem Ventilkörper (24) ausgebildete Öffnung (25) zumindest abschnittsweise einfügbar ist, und wobei das Ventil (26) in der Öffnung (25) des Ventilkörpers (24) derart angeordnet ist, dass bei einer, durch Öffnen des Druckluftschalters (30) und dadurch bedingten Druckbeaufschlagung des pneumatisch betätigbaren Kolbens (28) bewirkten, axialen Verschiebung des pneumatisch betätigbaren Kolbens (28) in Richtung des Ventilkörpers (24) der Vorsprung (28a) des pneumatisch betätigbaren Kolbens (28) dazu ausgebildet ist, das Ventil (26) von einer geschlossenen Stellung (P1) in eine geöffnete Stellung (P2) zu bewegen.

7. Gasdruckfeder nach Anspruch 6, **dadurch gekennzeichnet, dass** der Ventilkörper (24) eine im Bereich der Öffnung (25) ausgebildete, sich im Wesentlichen in Radialrichtung (R) der Gasdruckfeder (1) erstreckende Stichbohrung (31) aufweist, welche mit einem, zwischen der ersten Hohlkammer (10) und der zweiten Hohlkammer (15) in Radialrichtung (R) der Gasdruckfeder (1) ausgebildeten Hohlraum (32) kommuniziert, wobei der Hohlraum (32) mit dem zweiten Kammervolumen (V2) fluidisch verbunden ist, wobei das Ventil (26) dazu ausgebildet ist, in der geöffneten Stellung (P2) einen Gasaustausch zwischen dem ersten Kammervolumen (V1) zu dem zweiten Kammervolumen (V2) durchzuführen und in der geschlossenen Stellung (P1) einen Gasaustausch zwischen dem ersten Kammervolumen (V1) zu dem zweiten Kammervolumen (V2) zu blockieren.

8. Gasdruckfeder nach einem der Ansprüche 5 bis 7, **dadurch gekennzeichnet, dass** das Ventil (26) in der geöffneten Stellung (P2) eine fluidische Verbindung zum ersten Kammervolumen (V1) aufweist, wobei vorzugsweise das Ventil (26) eine in der zweiten Hohlkammer (15) zwischen dem Ventilkörper (24) und dem ersten Kammervolumen (V1) angeordnete Membran (34) durchdringt.

9. Gasdruckfeder nach einem der Ansprüche 5 bis 8, **dadurch gekennzeichnet, dass** der Ventilkörper (24) eine Rückstellfeder (36) aufweist, welche in der Öffnung (25) des Ventilkörpers (24) angeordnet ist und den pneumatisch betätigbaren Kolben (28) mit einer Federkraft (F) beaufschlagt.

10. Gasdruckfeder nach Anspruch 5 oder 6, **dadurch gekennzeichnet, dass** die zweite Hohlkammer (15) außerhalb der ersten Hohlkammer (10) angeordnet ist, wobei die zweite Hohlkammer (15) an einem ersten axialen Endabschnitt (15b) im Bereich des Ventilkörpers (24) mit der ersten Hohlkammer (10) fluidisch kommuniziert, und wobei die zweite Hohlkammer (15) an einem zweiten axialen Endabschnitt (15c) mit dem ersten Kammervolumen (V1) fluidisch kommuniziert.

11. Gasdruckfeder nach einem der vorhergehenden Ansprüche, **dadurch gekennzeichnet, dass** durch die Mittel (18) zum Feststellen und Freigeben des zweiten Kolbens (16) in der zweiten Hohlkammer (15) eine Minimalposition der ersten Kolbenstange (12) einstellbar ist.

12. Gasdruckfeder nach einem der vorhergehenden Ansprüche, **dadurch gekennzeichnet, dass** die zweite Kolbenstange (38) aus der ersten Kolbenstange (12) im Bereich des ersten Kolbens (14) austritt, wobei zwischen dem ersten Kolben (14) und der zweiten Kolbenstange (38) eine Dichtung (39) angeordnet ist.

13. Gasdruckfeder nach einem der vorhergehenden Ansprüche, **dadurch gekennzeichnet, dass** der zweite axiale Endabschnitt (10b) der ersten Hohlkammer (10) durch einen gegenüber der ersten Hohlkammer (10) mittels einem vierten Dichtmittel (40) abgedichteten Deckel (44) geschlossen ist.

## Claims

1. Gas pressure spring (1), having a first hollow chamber (10) which has a first axial end section (10a) and a second axial end section (10b), the first hollow chamber (10) having an opening (11) on the second axial end section (10b);
having an axially displaceable, first piston rod (12) which extends through the opening (11);
having a second hollow chamber (15) which is arranged in or outside the first hollow chamber (10);
having a first piston (14) which is connected to the first piston rod (12) on an axial end section (12a) of the first piston rod (12), which axial end section (12a) is arranged in the first hollow chamber (10) or the second hollow chamber (15), and which first piston (14) is arranged movably in the first hollow chamber (10) or the second hollow chamber (15);
having a second piston (16) which is arranged movably between the first axial end section (10a) and the first piston (14) in the first hollow chamber (10) or the second hollow chamber (15); and having
means (18) for fixing and releasing the second piston (16) in order to adjust a stroke of the first piston rod (12),
**characterized**
**in that** the first piston (14) and the second piston (16) are arranged in the first chamber volume (V1), the first piston rod (12) being of substantially hollow configuration, a second piston rod (38) which is of substantially hollow configuration being arranged at least in sections in a cavity (12b) of the first piston rod (12), the second piston (16) being connected to an axial end section of the second piston rod (38), which axial end section faces the first axial end section (10a) of the first hollow chamber (10).

2. Gas pressure spring according to Claim 1, **characterized in that** the means (18) for fixing and releasing the second piston (16) have a valve device (20) which is arranged between the first axial end section (10a) of the first chamber (10) and the second piston (16) which is arranged in the second hollow chamber (15).

3. Gas pressure spring according to Claim 2, **characterized in that** the second hollow chamber (15) has a first chamber volume (V1) and a second chamber volume (V2) which are divided by way of the second piston (16) which is sealed with respect to an inner surface (15a) of the second hollow chamber (15) by way of a first sealing means (21), the valve device (20) being configured to fluidically connect and to disconnect the first chamber volume (V1) and the second chamber volume (V2).

4. Gas pressure spring according to Claim 3, **characterized in that** the first chamber volume (V1) and the second chamber volume (V2) are filled with a pressure medium, preferably with nitrogen, the first chamber volume (V1) being arranged between the valve device (20) and the second piston (16), and the second chamber volume (V2) being arranged between the second piston (16) and a bearing unit (22) which is arranged on the second axial end section (10b) of the first hollow chamber (10), the valve device (20) being sealed by way of a second sealing means (23) with respect to the second hollow chamber (15), and the bearing unit (22) being sealed by way of a third sealing means (23a) with respect to the first hollow chamber (10).

5. Gas pressure spring according to Claim 3 or 4, **characterized in that** the valve device (20) has a valve body (24) and a valve (26), preferably a 2/2-way valve, which is arranged in an opening (25) which is configured in the axial direction (A) of the valve body (24), a pneumatically actuable piston (28) which can be moved in the first hollow chamber (10) being arranged between the valve body (24) and the first axial end section (10a) of the first hollow chamber (10), and an air pressure switch (30) which is connected pneumatically to the pneumatically actuable piston (28) being arranged in the region of the first axial end section (10a) of the first hollow chamber (10).

6. Gas pressure spring according to Claim 5, **characterized in that** the pneumatically actuable piston (28) has a projection (28a) which can be inserted at least in sections into the opening (25) which is configured in the valve body (24), and the valve (26) being arranged in the opening (25) of the valve body (24) in such a way that, in the case of an axial displacement of the pneumatically actuable piston (28) in the direction of the valve body (24), which axial displacement is brought about by way of opening of the air pressure switch (30) and pressurizing, induced as a result, of the pneumatically actuable piston (28), the projection (28a) of the pneumatically actuable piston (28) is configured to move the valve (26) from a closed position (P1) into an open position (P2).

7. Gas pressure spring according to Claim 6, **characterized in that** the valve body (24) has a branch bore (31) which is configured in the region of the opening (25), extends substantially in the radial direction (R) of the gas pressure spring (1), and communicates with a cavity (32) which is configured between the first hollow chamber (10) and the second hollow chamber (15) in the radial direction (R) of the gas pressure spring (1), the cavity (32) being connected fluidically to the second chamber volume (V2), the valve (26) being configured to carry out a gas exchange between the first chamber volume (V1) and the second chamber volume (V2) in the open position (P2), and to block a gas exchange between the first chamber volume (V1) and the second chamber volume (V2) in the closed position (P1).

8. Gas pressure spring according to one of Claims 5 to 7, **characterized in that** the valve (26) has a fluidic connection to the first chamber volume (V1) in the open position (P2), the valve (26) preferably penetrating a diaphragm (34) which is arranged in the second hollow chamber (15) between the valve body (24) and the first chamber volume (V1).

9. Gas pressure spring according to one of Claims 5 to 8, **characterized in that** the valve body (24) has a restoring spring (36) which is arranged in the opening (25) of the valve body (24) and loads the pneumatically actuable piston (28) with a spring force (F).

10. Gas pressure spring according to Claim 5 or 6, **characterized in that** the second hollow chamber (15) is arranged outside the first hollow chamber (10), the second hollow chamber (15) communicating fluidically with the first hollow chamber (10) on a first axial end section (15b) in the region of the valve body (24), and the second hollow chamber (15) communicating fluidically with the first chamber volume (V1) on a second axial end section (15c).

11. Gas pressure spring according to one of the preceding claims, **characterized in that** a minimum position of the first piston rod (12) can be set by way of the means (18) for fixing and releasing the second piston (16) in the second hollow chamber (15).

12. Gas pressure spring according to one of the preceding claims, **characterized in that** the second piston rod (38) exits from the first piston rod (12) in the region of the first piston (14), a seal (39) being arranged between the first piston (14) and the second piston rod (38).

13. Gas pressure spring according to one of the preceding claims, **characterized in that** the second axial end section (10b) of the first hollow chamber (10) is closed by way of a cover (44) which is sealed with respect to the first hollow chamber (10) by means of a fourth sealing means (40).

## Revendications

1. Ressort à pression de gaz (1), comportant une première chambre creuse (10) qui comprend une première partie d'extrémité axiale (10a) et une deuxième partie d'extrémité axiale (10b), la première chambre creuse (10) comprenant une ouverture (11) au niveau de la deuxième partie d'extrémité axiale (10b) ;
comportant une première tige de piston (12) déplaçable axialement et s'étendant à travers l'ouverture (11) ;
comportant une deuxième chambre creuse (15) disposée dans la première chambre creuse (10) ou à l'extérieur de celle-ci ;
comportant un premier piston (14), lequel est relié à la première tige de piston (12) au niveau d'une partie d'extrémité axiale (12a), disposée dans la première chambre creuse (10) ou la deuxième chambre creuse (15), de la première tige de piston (12) et lequel est disposé de manière mobile dans la première chambre creuse (10) ou la deuxième chambre creuse (15) ;
comportant un deuxième piston (16) disposé de manière mobile entre la première partie d'extrémité axiale (10a) et le premier piston (14) dans la première chambre creuse (10) ou la deuxième chambre creuse (15) ; et comportant
des moyens (18) de fixation et de libération du deuxième piston (16) pour régler une course de la première tige de piston (12),
**caractérisé en ce que**
le premier piston (14) et le deuxième piston (16) sont disposés dans le premier volume de chambre (V1), la première tige de piston (12) étant réalisée de manière sensiblement creuse, une deuxième tige de piston (38) réalisée de manière sensiblement creuse étant disposée, au moins dans certaines régions, dans une cavité (12b) de la première tige de piston (12), le deuxième piston (16) étant relié à une partie d'extrémité axiale de la deuxième tige de piston (38), laquelle partie d'extrémité axiale est tournée vers la première partie d'extrémité axiale (10a) de la première chambre creuse (10).

2. Ressort à pression de gaz selon la revendication 1, **caractérisé en ce que** lés moyens (18) de fixation et de libération du deuxième piston (16) comprennent un dispositif de soupape (20) disposé entre la première partie d'extrémité axiale (10a) de la première chambre (10) et le deuxième piston (16) disposé dans la deuxième chambre creuse (15).

3. Ressort à pression de gaz selon la revendication 2, **caractérisé en ce que** la deuxième chambre creuse (15) comprend un premier volume de chambre (V1) divisé par le deuxième piston (16) fermé hermétiquement par un premier moyen d'étanchéité (21) vis-à-vis d'une surface intérieure (15a) de la deuxième chambre creuse (15) et un deuxième volume de chambre (V2), le dispositif de soupape (20) étant conçu pour relier fluidiquement le premier volume de chambre (V1) et le deuxième volume de chambre (V2) et pour les séparer.

4. Ressort à pression de gaz selon la revendication 3, **caractérisé en ce que** le premier volume de chambre (V1) et le deuxième volume de chambre (V2) sont remplis d'un fluide sous pression, de préférence d'azote, le premier volume de chambre (V1) étant disposé entre le dispositif de soupape (20) et le deuxième piston (16) et le deuxième volume de chambre (V2) étant disposé entre le deuxième piston (16) et une unité de palier (22) disposée au niveau de la deuxième partie d'extrémité axiale (10b) de la première chambre creuse (10), le dispositif de soupape (20) étant fermé hermétiquement par un deuxième moyen d'étanchéité (23) vis-à-vis de la deuxième chambre creuse (15) et l'unité de palier (22) étant fermée hermétiquement par un troisième moyen d'étanchéité (23a) vis-à-vis de la première chambre creuse (10).

5. Ressort à pression de gaz selon la revendication 3 ou 4, **caractérisé en ce que** le dispositif de soupape (20) comprend un corps de soupape (24) et une soupape (26), de préférence une soupape à 2/2 voies, disposée dans une ouverture (25) formée dans la direction axiale (A) du corps de soupape (24), un piston (28) mobile dans la première chambre creuse (10) et pouvant être actionné de manière pneumatique étant disposé entre le corps de soupape (24) et la première partie d'extrémité axiale (10a) de la première chambre creuse (10), et un commutateur à air comprimé (30) en liaison pneumatique avec le piston (28) pouvant être actionné de manière pneumatique étant disposé dans la région de la première partie d'extrémité axiale (10a) de la première chambre creuse (10).

6. Ressort à pression de gaz selon la revendication 5, **caractérisé en ce que** le piston (28) pouvant être actionné de manière pneumatique comprend une saillie (28a), laquelle peut être insérée, au moins dans certaines régions, dans l'ouverture (25) formée dans le corps de soupape (24), et la soupape (26) étant disposée dans l'ouverture (25) du corps de soupape (24) de telle sorte qu'en cas de déplacement axial du piston (28) pouvant être actionné de manière pneumatique en direction du corps de soupape (24), lequel déplacement axial est provoqué par l'ouverture du commutateur à air comprimé (30) et l'application de pression, ainsi provoquée, sur le piston (28) pouvant être actionné de manière pneumatique, la saillie (28a) du piston (28) pouvant être actionné de manière pneumatique est conçue pour déplacer la soupape (26) d'une position fermée (P1) à une position ouverte (P2).

7. Ressort à pression de gaz selon la revendication 6, **caractérisé en ce que** le corps de soupape (24) comprend un alésage percé (31) formé dans la région de l'ouverture (25) et s'étendant sensiblement dans la direction radiale (R) du ressort à pression de gaz (1), lequel alésage communique avec une cavité (32) formée entre la première chambre creuse (10) et la deuxième chambre creuse (15) dans la direction radiale (R) du ressort à pression de gaz (1), la cavité (32) étant reliée fluidiquement au deuxième volume de chambre (V2), la soupape (26) étant conçue pour effectuer un échange de gaz entre le premier volume de chambre (V1) et le deuxième volume de chambre (V2) dans la position ouverte (P2) et pour bloquer un échange de gaz entre le premier volume de chambre (V1) et le deuxième volume de chambre (V2) dans la position fermée (P1).

8. Ressort à pression de gaz selon l'une des revendications 5 à 7, **caractérisé en ce que** la soupape (26) présente, dans la position ouverte (P2), une liaison fluidique avec le premier volume de chambre (V1), la soupape (26) traversant de préférence une membrane (34) disposée dans la deuxième chambre creuse (15) entre le corps de soupape (24) et le premier volume de chambre (V1).

9. Ressort à pression de gaz selon l'une des revendications 5 à 8, **caractérisé en ce que** le corps de soupape (24) comprend un ressort de rappel (36), lequel est disposé dans l'ouverture (25) du corps de soupape (24) et soumet le piston (28) pouvant être actionné de manière pneumatique à une force de ressort (F).

10. Ressort à pression de gaz selon la revendication 5 ou 6, **caractérisé en ce que** la deuxième chambre creuse (15) est disposée à l'extérieur de la première chambre creuse (10), la deuxième chambre creuse (15) étant en communication fluidique avec la première chambre creuse (10) au niveau d'une première partie d'extrémité axiale (15b) dans la région du corps de soupape (24), et la deuxième chambre creuse (15) étant en communication fluidique avec le premier volume de chambre (V1) au niveau d'une deuxième partie d'extrémité axiale (15c).

11. Ressort à pression de gaz selon l'une des revendications précédentes, **caractérisé en ce qu'**une position minimale de la première tige de piston (12) peut être réglée grâce aux moyens (18) de fixation et de libération du deuxième piston (16) dans la deuxième chambre creuse (15).

12. Ressort à pression de gaz selon l'une des revendications précédentes, **caractérisé en ce que** la deuxième tige de piston (38) sort de la première tige de piston (12) dans la région du premier piston (14), un joint d'étanchéité (39) étant disposé entre le premier piston (14) et la deuxième tige de piston (38).

13. Ressort à pression de gaz selon l'une des revendications précédentes, **caractérisé en ce que** la deuxième partie d'extrémité axiale (10b) de la première chambre creuse (10) est fermée au moyen d'un couvercle (44) fermé hermétiquement au moyen d'un quatrième moyen d'étanchéité (40) vis-à-vis de la première chambre creuse (10).
